# EUROPÄISCHE PATENTSCHRIFT

(11) **EP 1 974 979 B1**
(45) Veröffentlichungstag und Bekanntmachung des Hinweises auf die Patenterteilung: **06.05.2015**
(21) Anmeldenummer: 08004304.5
(22) Anmeldetag: 07.03.2008
(51) Int. Cl.: B60K 6/46, B60W 20/00, B60W 10/08, B60W 10/30, B66F 9/075, B66F 9/24, B60L 1/00, B60L 11/00, B60L 11/12

(54) **Flurförderzeug mit Hybridantrieb**
Floor conveyer with hybrid motor
Chariot de manutention doté d'un entraînement hybride

(30) Priorität: 27.03.2007 DE 102007014642
(43) Veröffentlichungstag der Anmeldung: 01.10.2008
(73) Patentinhaber: STILL GmbH, 22113 Hamburg (DE)
(72) Erfinder: Scheunemann, Patrick, 21037 Hamburg (DE); Hinkelmann, Martin, 21465 Wentorf bei Hamburg (DE)
(74) Vertreter: Geirhos, Johann

(56) Entgegenhaltungen:
- EP-A1- 1 736 433
- EP-A2- 1 013 498

## Beschreibung

Die Erfindung betrifft ein Flurförderzeug nach dem Oberbegriff des Patentanspruchs 1. Die Erfindung betrifft weiterhin ein Verfahren zum Betrieb eines Flurförderzeugs.

Bei Flurförderzeugen mit einem Verbrennungsmotor und einem elektrischen Fahrantriebsmotor, d.h. einem so genannten Hybridantrieb, wird zumeist die mechanische Energie des Verbrennungsmotors zunächst mittels eines Generators in elektrische Energie umgewandelt und dann unter Zwischenschaltung einer Steuerungsvorrichtung einer oder mehrere elektrische Fahrmotoren damit versorgt. Es kann auch eine Vorrichtung zur Speicherung elektrischer Energie über die Steuerungsvorrichtung mit dem Antriebsmotor verbunden sein, um beispielsweise bei Bremsvorgängen rückgespeiste Energie aufzunehmen und diese dann im Fahrbetrieb wieder abzugeben, wodurch der Verbrennungsmotor mit geringerer Leistung betrieben werden kann und somit Kraftstoff gespart wird. Eine zur Versorgung hydraulischer Antriebe benötigte Hydraulikpumpe ist üblicherweise direkt mit dem Verbrennungsmotor verbunden.

Die maximale Leistungsanforderung an den Verbrennungsmotor wird bei dieser Konfiguration durch die benötigte Leistung der Hydraulikantriebe vorgegeben, das heißt, zur Deckung des Leistungsbedarfs der Hydraulikpumpe wird der Verbrennungsmotor mit Nennlast betrieben. Demgegenüber ist bei allen anderen Betriebszuständen, also auch bei Maximallast der elektrischen Antriebe, beispielsweise beim Beschleunigen des Flurförderzeugs, der Verbrennungsmotor nur im Teillastbetrieb tätig, so dass die durchschnittliche Leistung des Verbrennungsmotors erheblich unter der Spitzenleistung liegt.

Beim Betrieb im Teillastbereich weist der Motor jedoch einen ungünstigen Wirkungsgrad auf. Motoren mit hoher Nennlast sind zudem aufwändiger und benötigen, beispielsweise auch aufgrund der aufwändigeren Nebenaggregate, wie Kühlsysteme, Anlasser, Starterbatterie, mehr Platz als kleinere und leistungsschwächere Motoren. Weiterhin ist das bei Anforderung der Nennlast erzeugte Geräuschniveau besonders hoch.

Der Erfindung liegt daher bezüglich des Flurförderzeugs die Aufgabe zugrunde, ein Flurförderzeug mit mindestens einem Verbrennungsmotor, mindestens einer mit dem Verbrennungsmotor in Wirkverbindung stehenden Hydraulikpumpe und mindestens einer mit dem Verbrennungsmotor und der Hydraulikpumpe in Wirkverbindung stehenden rotierenden elektrischen Maschine, mindestens einem elektrischen Antriebsmotor, mindestens einer Vorrichtung zur Speicherung elektrischer Energie und mindestens einer Vorrichtung zur Steuerung des Energieflusses zwischen dem elektrischen Antriebsmotor, der rotierenden elektrischen Maschine und der Vorrichtung zur Speicherung elektrischer Energie zu schaffen, das einfach und kostengünstig herstellbar ist und einen wirkungsgradoptimierten Betrieb ermöglicht.

Aus der EP 1 736 433 A1 ist ein Flurförderzeug nach dem Obergriff des Anspruchs 1 mit einem Verbrennungsmotor, einem Generator, der auch als Motor betreibbar und mit einer Hydraulikpumpe verbunden ist, sowie mit einer Kupplung zwischen Verbrennungsmotor und Generator bekannt. Im Fall einer hohen Leistungsanforderung der Arbeitshydraulik wird die Hydraulikpumpe sowohl von dem Generator im Motorenbetrieb, wie auch von dem Verbrennungsmotor angetrieben wird, wobei der Generator über einen Umrichter einer Batterie elektrische Energie entnimmt.

Aus der EP 1 013 498 A2 ist ein serielles Hybridantriebssystem mit Verbrennungsmotor-elektrischem Antrieb bekannt.

Diese Aufgabe wird mit den Merkmalen des Anspruchs 1 gelöst. Die rotierende elektrische Maschine ist wahlweise als Motor oder als Generator betreibbar und insbesondere bei hohem Leistungsbedarf der Hydraulikpumpe ist die rotierende elektrische Maschine als Motor betreibbar und elektrische Energie ist von der Vorrichtung zur Speicherung elektrischer Energie zu der rotierenden elektrischen Maschine übertragbar.

Indem die rotierende elektrische Maschine zur Energieversorgung der Hydraulikpumpe verwendet wird, kann die in der Vorrichtung zur Speicherung elektrischer Energie gespeicherte Energie auch zum Betrieb des Hydraulikkreises genutzt werden. Dadurch kann entweder die Leistung des Hydraulikkreises und damit des Flurförderzeugs erhöht oder aber ein Verbrennungsmotor mit kleinerer Nennleistung verwendet werden, was Kraftstoff einspart und den Raumbedarf im Flurförderzeug reduziert. Erfindungsgemäß umfasst die elektrische Steuerungsvorrichtung mindestens einen Eingangsumrichter mindestens einen Ausgangsumrichter und mindestens einen zwischen dem Eingangsumrichter und dem Ausgangsumrichter angeordneten Gleichspannungskreis und die Vorrichtung zur Speicherung elektrischer Energie ist mit dem Gleichspannungskreis elektrisch über einen Gleichstrom-Umrichter verbunder.

In einer besonders vorteilhaften Ausbildung der Erfindung ist die rotierende elektrische Maschine als Starter für den Verbrennungsmotor betreibbar. Dadurch wird kein eigenständiger Startermotor benötigt, was sowohl Bauraum einspart als auch den Herstellaufwand reduziert.

Es ist zweckmäßig, wenn die Vorrichtung zur Speicherung elektrischer Energie als Batterie ausgebildet ist. Batterien sind in großer Vielfalt in unterschiedlichen Ausführungen und mit unterschiedlichen Eigenschaften erhältlich, beispielsweise als Bleiakkus, Nickel-Metallhydrid- oder Lithium-lonen- sowie Lithium-Polymer-Akkus, so dass eine an den Einsatzfall angepasste Ausführung einfach realisierbar ist.

Es ist ebenso zweckmäßig, wenn die Vorrichtung zur Speicherung elektrischer Energie als Kondensator hoher Kapazität ausgebildet ist. Derartige Energiespeicher unterliegen niedrigerem Verschleiß als Batterien und sind für schnelle Lade-/Entladevorgänge besser geeignet.

Es ist ebenfalls zweckmäßig, wenn mindestens ein elektrischer Bremswiderstand vorgesehen ist. Ist die elektrische Energiespeichervorrichtung vollständig aufgeladen, kann dennoch Bremsenergie eines elektrischen Antriebsmotors abgebaut und dieser somit als Betriebsbremse verwendet werden.

Es ist vorteilhaft, wenn mindestens eine Vorrichtung zur Erfassung von Betriebsdaten, insbesondere von Drehmoment und Drehzahl des Verbrennungsmotors, der rotierenden elektrischen Maschine, des Antriebsmotors und der Hydraulikpumpe, Temperaturen beteiligter Komponenten, Spannungen und Ströme elektrischer Komponenten, Ladezustand und allgemeiner Zustand der Vorrichtung zur Speicherung elektrischer Energie, Verbrauchsdaten und Ladedruck des Verbrennungsmotors, Umgebungsluftdruck, Gewicht der mitgeführten Last und Druck im Hydrauliksystem, vorgesehen ist. Dadurch kann der Betriebszustand des Flurförderzeugs erfasst und der Betrieb optimiert werden, beispielsweise indem die Energieverteilung zwischen den Komponenten geeignet gesteuert wird.

In einer zweckmäßigen Ausgestaltung umfasst die Vorrichtung zur Steuerung des Energieflusses die Vorrichtung zur Erfassung von Betriebsdaten. Da die Steuervorrichtung viele der erfassten Daten für ihren Betrieb benötigt beziehungsweise ohnehin erfasst, wird der Aufwand für Herstellung und Betrieb reduziert.

Weiterhin ist es von Vorteil, wenn zwischen dem Verbrennungsmotor und der rotierenden elektrischen Maschine und/oder dem Verbrennungsmotor und der Hydraulikpumpe mindestens eine Kupplung angeordnet ist. Dadurch kann der Verbrennungsmotor von einer oder beiden anderen Komponenten abgekuppelt werden. Indem der Verbrennungsmotor von beiden Komponenten abgekuppelt wird, ist ein rein elektrischer Betrieb des Flurförderzeugs mit abgeschaltetem Verbrennungsmotor möglich, um dieses vollständig abgasfrei, beispielsweise in Innenräumen, betreiben zu können.

Bezüglich des Verfahrens liegt der Erfindung die Aufgabe zugrunde, ein Verfahren zum Betrieb eines Flurförderzeugs nach einem der Ansprüche 1 bis 8 zu schaffen das einen optimierten Betrieb des Flurförderzeugs, insbesondere hinsichtlich Verbrauch und Geräuschentwicklung, ermöglicht.

Diese Aufgabe wird erfindungsgemäß dadurch gelöst, dass vorzugsweise in der Vorrichtung zur Steuerung des Energieflusses zwischen dem elektrischen Antriebsmotor, der rotierenden elektrischen Maschine und der Vorrichtung zur Speicherung elektrischer Energie Betriebsdaten des Flurförderzeugs sowie Leistungsflüsse und Wirkungsgrade der im Betrieb aktiven Komponenten erfasst werden. Dadurch ist in jedem Betriebszustand bekannt, welche Leistung von welchen Komponenten angefordert beziehungsweise bereitgestellt wird. Diese Kenntnis ist Vorrausetzung für eine Optimierung von Energieströmen. Als Komponenten des Flurförderzeugs sind im Sinne dieser Anmeldung alle Teile des Fahrzeugs zu sehen, deren Leistungsaufnahme beziehungsweise -abgabe eigenständig bestimmbar ist, also neben den Hauptenergieverbrauchern oder -lieferanten wie Verbrennungsmotor, Antriebsmotor, rotierende elektrische Maschine, Hydraulikpumpe elektrischer Speichervorrichtung oder Umrichtern auch Steuerungseinheiten, Sensoren, Lampen etc.

Es ist zweckmäßig, wenn aus den Betriebsdaten der augenblickliche und/oder unmittelbar bevorstehende, vorzugsweise innerhalb der nächsten 10 Sekunden erwartete Betriebszustand des Flurförderzeugs ermittelt wird. Dadurch ist bekannt, in welchem Zustand sich das Flurförderzeug momentan oder in unmittelbarer Zukunft befinden wird und es kann beispielsweise der Leistungsbedarf für diesen Zustand bestimmt werden.

Es ist besonders vorteilhaft, wenn für jeden Betriebszustand aus den Leistungsflüssen und Wirkungsgraden der aktiven Komponenten ein kraftstoffäquivalenter Wert ermittelt wird, der der im augenblicklichen Betriebszustand verbrauchten Treibstoffenergiemenge entspricht. Ein kraftstoffäquivalenter Wert ist dabei derjenige Wert, der die Menge an Kraftstoff angibt, die zur Erzeugung der momentan abgefragten Energie benötigt wurde. Dadurch wird in jeder Situation ersichtlich, wie der Verbrauch an Treibstoff durch den Einsatz der elektrischen Komponenten, insbesondere des Energiespeichers sowie der in regenerativem Modus betriebenen Antriebsmotoren oder der rotierenden elektrischen Maschine beeinflusst wird.

Es ist ebenfalls vorteilhaft, wenn die Leistungsflüsse zwischen den Komponenten so geregelt werden, dass bei gleicher Arbeitsleistung des Flurförderzeugs der kraftstoffäquivalente Wert minimiert wird. Indem anhand des kraftstoffäquivalenten Werts festgelegt wird, in welcher Mischung die benötigte Energie aus dem Verbrennungsmotor, dem elektrischen Energiespeicher oder aus der EnergieRückgewinnung eines Verbrauchers, beispielsweise eines Antriebsmotors während eines Bremsvorgangs oder einer Bergabfahrt, entnommen werden sollen, wird ein verbrauchsoptimierter Betrieb ermöglicht, der gegenüber einer starren Vorgabe erhebliche Einsparungen ermöglicht.

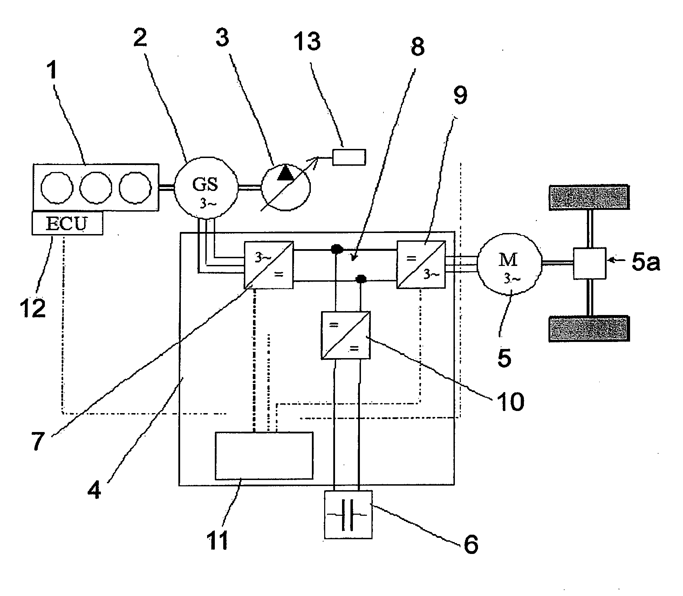

Weitere Vorteile und Einzelheiten der Erfindung werden im Folgenden anhand des in der Zeichnung dargestellten Ausführungsbeispiels näher erläutert. Die Figur zeigt schematisch den Aufbau eines erfindungsgemäßen Flurförderzeugs.

Ein Verbrennungsmotor 1 treibt eine rotierende elektrische Maschine 2 sowie eine Hydraulikpumpe 3 an. Die Hydraulikpumpe 3 liefert hydraulische Energie für einen hier nicht dargestellten Hydraulikkreis, der beispielsweise Hub- und/oder Neigezylinder für einen Hubmast umfassen kann.

Die rotierende elektrische Maschine 2 ist als permanenterregte Synchronmaschine ausgeführt und erzeugt im Normalbetrieb elektrischen Strom, der in einer Vorrichtung 4 zur Steuerung des Energieflusses an einen Fahrmotor 5 mit einem Fahrantrieb 5a sowie eine Vorrichtung 6 zur Speicherung elektrischer Energie geleitet werden kann. Zu diesem Zweck enthält die Vorrichtung 4 zur Steuerung des Energieflusses einen Eingangsumrichter 7, der über einen Gleichspannungszwischenkreis 8 mit einem Fahrmotorumrichter 9 verbunden ist. Ebenfalls an den Gleichspannungszwischenkreis 8 angeschlossen ist über einen Gleichstrom-Umrichter 10 die Vorrichtung 6 zur Speicherung elektrischer Energie, die im vorliegenden Ausführungsbeispiel als Batterie 6 ausgeführt ist.

Eine Regelungsvorrichtung 11 sammelt die Betriebsdaten der Komponenten, wozu diese mit einer Steuerung 12 des Verbrennungsmotors 1, dem Eingangsumrichter 7, dem Ausgangsumrichter 8, den Gleichstromumrichter 10, sowie einer Verstelleinheit 13 der Hydraulikpumpe 3 in Wirkverbindung steht. So werden Drehmoment und Drehzahl des Verbrennungsmotors 1, der rotierenden elektrischen Maschine 2, des Antriebsmotors 5 und der Hydraulikpumpe 3, die Temperaturen der angeschlossenen Komponenten, die Spannungen und Ströme der elektrischen Komponenten, der Ladezustand und der allgemeiner Zustand der Batterie 6, der augenblickliche Kraftstoffverbrauch und der Ladedruck des Verbrennungsmotors 1, der Umgebungsluftdruck, das Gewicht der mitgeführten Last und der Druck im Hydrauliksystem erfasst. Ebenso werden die von einer Bedienperson über Bedienelemente vorgegebenen Leistungsanforderungen, also beispielsweise die über die Stellung eines Fahrpedals vorgegebene Sollgeschwindigkeit und -beschleunigung oder gewünschte Hubbewegungen eines Lastaufnahmemittels, erfasst.

Aus diesen Betriebsdaten wird ermittelt, in welchem Betriebszustand sich das Flurförderzeug gerade befindet und wie sich dieser verändern wird. Ist beispielsweise das Fahrpedal voll durchgetreten, ist davon auszugehen, dass das Flurförderzeug auf Höchstgeschwindigkeit beschleunigt werden soll, während bei voll ausgerenktem Bedienelement für die Hubfunktion ein möglichst schnelles Anheben der Last gefordert ist. Ist diese Last beispielsweise aus dem Hydraulikdruck annähernd bekannt, sind auch die Leistungsanforderungen für den Hydraulikkreis bekannt. Standardbetriebszustände, die vordefiniert sind, sind in der Regelungsvorrichtung abgespeichert, es ist aber auch möglich, derartige Zustände im Betrieb selbsttätig zu ermitteln und dann in der Regelungsvorrichtung abzulegen.

In der Regelungsvorrichtung sind weiterhin die Wirkungsgrade der einzelnen Komponenten in den unterschiedlichen Betriebszuständen abgespeichert. Aus dem für einen Betriebszustand erwarteten Energiebedarf, den möglichen Energiequellen (Verbrennungsmotor 1, Energiespeicher 6, regenerativer Verbraucher 5, 2), sowie den Wirkungsgraden der beteiligten Komponenten wird mit gängigen Optimierungsverfahren die für den jeweiligen Betriebszustand mögliche Verteilung der Leistungsströme berechnet, bei der die kraftstoffäquivalente Kennzahl minimiert wird. Dies kann beispielsweise dadurch geschehen, dass die Leistungsanforderungen und eine ideale Verteilung der Leistungsströme für vorgegebene Betriebszustände in der Regelungsvorrichtung tabellarisch abgelegt sind und bei Bedarf ausgelesen werden.

Bei der Nutzung regenerativer Verbraucher wird dabei der zur Erzeugung der zurückgewonnenen Energie verbrauchte Kraftstoff nicht berücksichtigt, jedoch ist bei ausschließlichem Einsatz direkt oder über den Energiespeicher zurückgewonnener Energie der Leerlaufverbrauch des Verbrennungsmotors einzuberechnen.

Selbstverständlich sind auch andere Ausgestaltungsformen der Erfindung denkbar, sowohl was den Aufbau des Flurförderzeugs betrifft als auch die Durchführung des erfindungsgemäßen Verfahrens. Wird zwischen dem Verbrennungsmotor und der rotierenden elektrischen Maschine beispielsweise eine Kupplung angeordnet, so kann das Flurförderzeug auch vollständig elektrisch betrieben werden, was besonders in Innenräumen vorteilhaft ist. Die Betriebsdauer hängt dann von der Größe des elektrischen Energiespeichers ab, der je nach Einsatzfall geeignet gewählt werden kann. Die Ansteuerung der Kupplung kann sowohl durch Vorgabe einer Bedienperson erfolgen, beispielsweise wenn diese in einem Gebäude vollelektrischen Betrieb benötigt, aber auch in Abhängigkeit vom Betriebszustand des Flurförderzeugs, beispielsweise je nach Füllzustand des elektrischen Energiespeichers, automatisch erfolgen.

Es ist auch denkbar, Energie aus dem Hydraulikkreis über die Hydraulikpumpe 3 über die rotierende elektrische Maschine 2 an die elektrische Speichervorrichtung 6 zurückzuspeisen.

Weiterhin kann die Batterie beispielsweise als Bleiakku, als NiMH-, Lithium-lonen- oder Lithium-Polymer-Akku oder in jeder anderen Bauweise realisiert werden, es kann jedoch auch anstelle der Batterie ein Kondensator hoher Kapazität verwendet werden. Ebenso ist eine Kombination verschiedener Energiespeicher denkbar, um die Vorteile der einzelnen Typen, wie beispielsweise großes Speichervermögen, lange Lebensdauern, schnelle Leistungsaufnahme sowie -abgabe oder niedrige Kosten in vorteilhafter Weise zu kombinieren.

Auch den Verbrennungsmotor und den oder die elektrischen Antriebsmotoren sowie die rotierende elektrische Maschine wird der Fachmann entsprechend der Aufgabe und dem Stand der Technik geeignet auswählen, also beispielsweise einen Dieselmotor oder einen Treibgasmotor sowie Gleichstrom- oder Drehstromaggregate. Ebenso ist jeder für Flurförderzeuge geeignete Typ von Hydraulikpumpe einsetzbar.

Die Leistungsanforderungen für die relevanten Betriebszustände können beispielsweise für einen bestimmten Flurförderzeugtyp mit bestimmter Ausstattung vorab experimentell ermittelt und in der Regelungsvorrichtung 11 abgespeichert werden, ebenso ist aber auch eine Ermittlung im laufenden Betrieb des Flurförderzeugs denkbar, die entweder zur Anpassung bereits abgelegter Daten oder aber zur Erstellung neuer Anforderungsprofile genutzt werden kann.

## Patentansprüche

1. Flurförderzeug mit mindestens einem Verbrennungsmotor (1), mindestens einer mit dem Verbrennungsmotor (2) in Wirkverbindung stehenden Hydraulikpumpe (3) und mindestens einer mit dem Verbrennungsmotor (1) und der Hydraulikpumpe (3) in Wirkverbindung stehenden rotierenden elektrischen Maschine (2), mindestens einem elektrischen Antriebsmotor (5), mindestens einer Vorrichtung (6) zur Speicherung elektrischer Energie und mindestens einer Vorrichtung (4) zur Steuerung des Energieflusses zwischen dem elektrischen Antriebsmotor (5), der rotierenden elektrischen Maschine (2) und der Vorrichtung (6) zur Speicherung elektrischer Energie, wobei die rotierende elektrische Maschine (2) wahlweise als Motor oder als Generator betreibbar ist und bei hohem Leistungsbedarf der Hydraulikpumpe (3) die rotierende elektrische Maschine (2) als Motor betreibbar ist und elektrische Energie von der Vorrichtung (6) zur Speicherung elektrischer Energie zu der rotierenden elektrischen Maschine (2) übertragbar ist,
**dadurch gekennzeichnet,**
**dass** die elektrische Vorrichtung (4) zur Steuerung des Energieflusses mindestens einen Eingangsumrichter (7) und mindestens einen Ausgangsumrichter (9) und mindestens einen zwischen dem Eingangsumrichter (7) und dem Ausgangsumrichter (9) angeordneten Gleichspannungskreis (8) umfasst und die Vorrichtung (6) zur Speicherung elektrischer Energie mit dem Gleichspannungskreis (8) über einen Gleichstrom-Umrichter (10) elektrisch verbunden ist.

2. Flurförderzeug nach Anspruch 1, **dadurch gekennzeichnet, dass** die rotierende elektrische Maschine (2) als Starter für den Verbrennungsmotor (1) betreibbar ist.

3. Flurförderzeug nach Anspruch 1 oder 2, **dadurch gekennzeichnet, dass** die Vorrichtung (6) zur Speicherung elektrischer Energie als Batterie (6) ausgebildet ist.

4. Flurförderzeug nach einem der Ansprüche 1 bis 3, **dadurch gekennzeichnet, dass** die Vorrichtung (6) zur Speicherung elektrischer Energie als Kondensator hoher Kapazität ausgebildet ist.

5. Flurförderzeug nach einem der Ansprüche 1 bis 4, **dadurch gekennzeichnet, dass** mindestens ein elektrischer Bremswiderstand vorgesehen ist.

6. Flurförderzeug nach einem der Ansprüche 1 bis 5, **dadurch gekennzeichnet, dass** mindestens eine Vorrichtung (11) zur Erfassung von Betriebsdaten, insbesondere von Drehmoment und Drehzahl des Verbrennungsmotors (1), der rotierenden elektrischen Maschine (2), des Antriebsmotors (5) und der Hydraulikpumpe (3), Temperaturen beteiligter Komponenten, Spannungen und Ströme elektrischer Komponenten, Ladezustand und allgemeiner Zustand der Vorrichtung (6) zur Speicherung elektrischer Energie, Verbrauchsdaten und Ladedruck des Verbrennungsmotors (1), Umgebungsluftdruck, Gewicht der mitgeführten Last und Druck im Hydrauliksystem, vorgesehen ist.

7. Flurförderzeug nach einem der Ansprüche 1 bis 6, **dadurch gekennzeichnet, dass** die Vorrichtung (4) zur Steuerung des Energieflusses die Vorrichtung (11) zur Erfassung von Betriebsdaten umfasst.

8. Flurförderzeug nach einem der Ansprüche 1 bis 7, **dadurch gekennzeichnet, dass** zwischen dem Verbrennungsmotor (1) und der rotierenden elektrischen Maschine (2) und/oder der Hydraulikpumpe (3) mindestens eine Kupplung angeordnet ist.

9. Verfahren zum Betrieb eines Flurförderzeugs nach einem der vorhergehenden Ansprüche,
**dadurch gekennzeichnet,**
**dass** vorzugsweise in der Vorrichtung (4) zur Steuerung des Energieflusses zwischen dem elektrischen Antriebsmotor (5), der rotierenden elektrischen Maschine (2) und der Vorrichtung (6) zur Speicherung elektrischer Energie Betriebsdaten des Flurförderzeugs sowie Leistungsflüsse und Wirkungsgrade der im Betrieb aktiven Komponenten erfasst werden.

10. Verfahren nach Anspruch 9, **dadurch gekennzeichnet, dass** aus den Betriebsdaten der augenblickliche und/oder unmittelbar bevorstehende, vorzugsweise innerhalb der nächsten 10 Sekunden erwartete Betriebszustand des Flurförderzeugs ermittelt wird.

11. Verfahren nach Anspruch 9 oder 10, **dadurch gekennzeichnet, dass** für jeden Betriebszustand aus den Leistungsflüssen und Wirkungsgraden der aktiven Komponenten ein kraftstoffäquivalenter Wert vermittelt wird, der der im augenblicklichen und/oder unmittelbar bevorstehenden, vorzugsweise innerhalb der nächsten 10 Sekunden erwarteten Betriebszustand verbrauchten Treibstoffenergiemenge entspricht.

12. Verfahren nach einem der Ansprüche 9 bis 11, **dadurch gekennzeichnet, dass** die Leistungsflüsse zwischen den Komponenten so geregelt werden, dass bei gleicher Arbeitsleistung des Flurförderzeugs der kraftstoffäquivalente Wert minimiert wird.

## Claims

1. Industrial truck having at least one internal combustion engine (1), at least one hydraulic pump (3) which is operatively connected to the internal combustion engine (2), and at least one rotating electrical machine (2) which is operatively connected to the internal combustion engine (1) and the hydraulic pump (3), at least one electric drive motor (5), at least one apparatus (6) for storing electrical energy, and at least one apparatus (4) for controlling the flow of energy between the electric drive motor (5), the rotating electrical machine (2) and the apparatus (6) for storing electrical energy, wherein the rotating electrical machine (2) can be selectively operated as a motor or as a generator, and, when there is a high power requirement from the hydraulic pump (3), the rotating electrical machine (2) can be operated as a motor and electrical energy can be transmitted to the rotating electrical machine (2) from the apparatus (6) for storing electrical energy, **characterized in that** the electrical apparatus (4) for controlling the flow of energy comprises at least one input converter (7) and at least one output converter (9) and at least one DC voltage circuit (8) which is arranged between the input converter (7) and the output converter (9), and the apparatus (6) for storing electrical energy is electrically connected to the DC voltage circuit (8) by means of a DC converter (10).

2. Industrial truck according to Claim 1, **characterized in that** the rotating electrical machine (2) can be operated as a starter for the internal combustion engine (1).

3. Industrial truck according to Claim 1 or 2, **characterized in that** the apparatus (6) for storing electrical energy is in the form of a battery (6).

4. Industrial truck according to one of Claims 1 to 3, **characterized in that** the apparatus (6) for storing electrical energy is in the form of a capacitor with a high capacity.

5. Industrial truck according to one of Claims 1 to 4, **characterized in that** at least one electrical braking resistor is provided.

6. Industrial truck according to one of Claims 1 to 5, **characterized in that** at least one apparatus (11) for detecting operating data, in particular torque and rotation speed of the internal combustion engine (1), of the rotating electrical machine (2), of the drive motor (5) and of the hydraulic pump (3), temperatures of involved components, voltages and currents of electrical components, state of charge and general state of the apparatus (6) for storing electrical energy, consumption data and charge pressure of the internal combustion engine (1), ambient air pressure, weight of the load which is carried along and pressure in the hydraulic system, is provided.

7. Industrial truck according to one of Claims 1 to 6, **characterized in that** the apparatus (4) for controlling the flow of energy comprises the apparatus (11) for detecting operating data.

8. Industrial truck according to one of Claims 1 to 7, **characterized in that** at least one clutch is arranged between the internal combustion engine (1) and the rotating electrical machine (2) and/or the hydraulic pump (3).

9. Method for operating an industrial truck according to one of the preceding claims, **characterized in that** operating data of the industrial truck and also flows of power and degrees of efficiency of the components which are active during operation are preferably detected in the apparatus (4) for controlling the flow of energy between the electric drive motor (5), the rotating electrical machine (2) and the apparatus (6) for storing electrical energy.

10. Method according to Claim 9, **characterized in that** the current and/or immediately imminent operating state of the industrial truck, preferably the operating state of the industrial truck expected within the next 10 seconds, is determined from the operating data.

11. Method according to Claim 9 or 10, **characterized in that** a fuel-equivalent value is determined from the flows of power and degrees of efficiency of the active components for each operating state, the said fuel-equivalent value corresponding to the quantity of energy in the fuel which is consumed in the current and/or immediately imminent operating state, preferably the operating state expected within the next 10 seconds.

12. Method according to one of Claims 9 to 11, **characterized in that** the flows of power between the components are regulated such that the fuel-equivalent value is minimized given the same drive power of the industrial truck.

## Revendications

1. Chariot de manutention comprenant au moins un moteur à combustion interne (1), au moins une pompe hydraulique (3) en liaison fonctionnelle avec le moteur à combustion interne (2) et au moins une machine électrique (2) rotative en liaison fonctionnelle avec le moteur à combustion interne (1) et la pompe hydraulique (3), au moins un moteur d'entraînement électrique (5), au moins un dispositif (6) pour stocker de l'énergie électrique et au moins un dispositif (4) pour commander le flux d'énergie entre le moteur d'entraînement électrique (5), la machine électrique rotative (2) et le dispositif (6) pour stocker de l'énergie électrique, la machine électrique rotative (2) pouvant fonctionner au choix en tant que moteur ou en tant que générateur et en cas de besoin en puissance important de la pompe hydraulique (3), la machine électrique rotative (2) pouvant fonctionner en tant que moteur et de l'énergie électrique pouvant être transmise du dispositif (6) pour stocker de l'énergie électrique à la machine électrique rotative (2),
**caractérisé en ce que**
le dispositif électrique (4) pour commander le flux d'énergie comprend au moins un convertisseur d'entrée (7) et au moins un convertisseur de sortie (9) et au moins un circuit de tension continue (8) disposé entre le convertisseur d'entrée (7) et le convertisseur de sortie (9) et le dispositif (6) pour stocker de l'énergie électrique est connecté électriquement au circuit de tension continue (8) par le biais d'un convertisseur de courant continu (10).

2. Chariot de manutention selon la revendication 1, **caractérisé en ce que** la machine électrique rotative (2) peut fonctionner en tant que démarreur pour le moteur à combustion interne (1).

3. Chariot de manutention selon la revendication 1 ou 2, **caractérisé en ce que** le dispositif (6) pour stocker de l'énergie électrique est réalisé sous forme de batterie (6).

4. Chariot de manutention selon l'une quelconque des revendications 1 à 3, **caractérisé en ce que** le dispositif (6) pour stocker de l'énergie électrique est réalisé sous forme de condensateur de haute capacité.

5. Chariot de manutention selon l'une quelconque des revendications 1 à 4, **caractérisé en ce qu'**au moins une résistance de freinage électrique est prévue.

6. Chariot de manutention selon l'une quelconque des revendications 1 à 5, **caractérisé en ce qu'**au moins un dispositif (11) est prévu pour détecter des données de fonctionnement, en particulier le couple et le régime du moteur à combustion interne (1), de la machine électrique rotative (2), du moteur d'entraînement (5) et de la pompe hydraulique (3), des températures de composants impliqués, des tentions et des courants de composants électriques, un état de charge et un état général du dispositif (6) pour stocker de l'énergie électrique, des données de consommation et la pression de charge du moteur à combustion interne (1), la pression de l'air ambiant, le poids de la charge emportée et la pression dans le système hydraulique.

7. Chariot de manutention selon l'une quelconque des revendications 1 à 6, **caractérisé en ce que** le dispositif (4) pour commander le flux d'énergie comprend le dispositif (11) pour détecter des données de fonctionnement.

8. Chariot de manutention selon l'une quelconque des revendications 1 à 7, **caractérisé en ce qu'**entre le moteur à combustion interne (1) et la machine électrique rotative (2) et/ou la pompe hydraulique (3) est disposé au moins un embrayage.

9. Procédé pour faire fonctionner un chariot de manutention selon l'une quelconque des revendications précédentes,
**caractérisé en ce que**
de préférence dans le dispositif (4) pour commander le flux d'énergie entre le moteur d'entraînement électrique (5), la machine électrique rotative (2) et le dispositif (6) pour stocker de l'énergie électrique sont détectés des données de fonctionnement du chariot de manutention ainsi que des flux de puissance et des rendements des composants actifs pendant le fonctionnement.

10. Procédé selon la revendication 9, **caractérisé en ce qu'**à partir des données de fonctionnement, on détermine l'état de fonctionnement du chariot de manutention instantané et/ou immédiatement imminent, de préférence attendu en l'espace des 10 prochaines secondes.

11. Procédé selon la revendication 9 ou 10, **caractérisé en ce que** pour chaque état de fonctionnement, on détermine à partir des flux de puissance et des rendements des composants actifs une valeur équivalente en carburant qui correspond à la quantité d'énergie de carburant consommée dans l'état de fonctionnement instantané et/ou immédiatement imminent, de préférence attendu en l'espace des 10 prochaines secondes.

12. Procédé selon l'une quelconque des revendications 9 à 11, **caractérisé en ce que** les flux de puissance entre les composants sont régulés de telle sorte que pour une puissance de travail identique du chariot de manutention, la valeur équivalente en carburant soit minimisée.
